# EUROPEAN PATENT SPECIFICATION

(11) **EP 2 820 363 B1**
(45) Date of publication and mention of the grant of the patent: **18.07.2018**
(21) Application number: 13720027.5
(22) Date of filing: 22.02.2013
(51) Int. Cl.: F26B 1/00, B09B 3/00, B02C 18/00

(54) **MACHINE FOR COMPACTING ORGANIC WASTE AND INTEGRATED SYSTEM FOR THE SEPARATION AND DIFFERENTIAL TREATMENT OF EACH TYPOLOGY OF WASTE**
VORRICHTUNG ZUM VERDICHTEN VON ORGANISCHEN ABFÄLLEN UND INTEGRIERTES SYSTEM ZUR TRENNUNG UND UNTERSCHIEDLICHEN BEHANDLUNG VERSCHIEDENER TYPEN VON ABFÄLLEN
MACHINE POUR LE COMPACTAGE DE DÉCHETS ORGANIQUES ET MÉCANISME INTÉGRÉ POUR LA SÉPARATION ET LE TRAITEMENT DIFFÉRENTIEL DE CHAQUE TYPOLOGIE DE DÉCHETS

(30) Priority: 27.02.2012 IT RM20120073
(43) Date of publication of application: 07.01.2015
(73) Proprietor: R.A.S.T Industry's S.r.l., 00152 Roma (IT)
(72) Inventor: ROMANAZZI, Pasquale, 00018 Palombara Sabina (IT)
(74) Representative: Celona, Antonio
(86) International application number: PCT/IB2013/051447
(87) International publication number: WO 2013/128351

(56) References cited:
- EP-A1- 1 167 239
- WO-A1-94/06576
- WO-A1-02/072271
- JP-A- 9 000 962
- JP-A- 2006 061 873
- KR-A- 20090 066 946
- US-A1- 2010 276 526

## Description

### Field of the invention

The present invention relates to a machine for compacting organic solid waste and an integrated system for the separation and differential treatment of waste, in particular domestic waste, comprising the above-mentioned machine.

### Background of the invention

There currently exist various industrial waste treatment systems in special plants, where the differentiated waste is treated once it reaches the plant at the end of a differentiated waste collection process that is often complex and articulated, and thus considerably expensive.

Domestic waste means the waste generated by residential homes or generated by public enterprises, such as bars, restaurants, pizzerias or other commercial businesses.

In particular there do not appear to exist domestic waste treatment systems that allow all the different typologies of domestic waste to be treated in a differential way in the same place of production of the waste so that it can be subsequently sent directly for re-use, without the need for transport to a landfill.

In particular, as regards organic waste, at domestic level there exist only a few waste grinding systems with subsequent chemical treatment of the ground waste or direct dispersion of the ground organic waste through the drain of the sink. Other known systems only provide a drying step to eliminate bad smells or decomposition of organic waste.

There is therefore a need to produce a machine for compacting organic solid waste and an integrated system for the treatment of domestic waste that can overcome the above-mentioned drawbacks. Document WO 94/06576 discloses a compactor machine according to the preamble of claim 1.

### Summary of the invention

The main aim of the present invention is to produce a machine for compacting organic solid waste, the so-called "wet" waste, that is more efficient with respect to the solutions that are already present on the market.

Another aim of the invention is to produce an integrated local system for the separation and differential treatment of every typology of domestic solid waste configured to allow a differential treatment of domestic waste in the same place of production so that it can be subsequently sent directly for re-use, without the need for transport to a landfill.

The present invention therefore proposes to achieve the above-discussed aims by producing a machine for compacting organic solid waste, which, in compliance with claim 1, comprises grinding means for grinding the organic solid waste, centrifugation means for centrifuging the ground organic solid waste and drying means for drying the ground and centrifuged organic solid waste;
wherein the centrifugation means comprise
- a first container, provided with a plurality of holes, adapted to receive the ground organic waste coming from the grinding means;
- a first motor for transmitting a centrifugal rotation, in one direction of rotation or in the other, to said first container about a first axis of rotation;
- a second container, arranged externally to the first container (50) so as to contain said first container and collect the centrifugation liquid ejected through the holes during the centrifugation;
and wherein the drying means comprise
- a third container adapted to receive the ground and centrifuged organic waste coming from the centrifugation means;
- hot air inlet means into said third container;
- an extraction device for extracting the drying air from the third container. Another aspect of the invention relates to an integrated system for the differential treatment of waste which, in compliance with claim 9, comprises:
- a first compactor machine for compacting organic solid waste according to any one of the preceding claims,
- and a second compactor and separator machine for compacting inorganic solid waste and separating it on the basis of the material making up the inorganic solid waste, said second machine comprising compacting means for grinding and/or pressing the inorganic solid waste introduced into the second machine, wherein at least part of said compacting means are movable on sliding guides above a plurality of compartments, each compartment being adapted to receive a respective type of inorganic solid waste.

With the system of the present invention, the waste, treated at source, becomes a marketable commodity instead of a burden to dispose of with direct, indirect and social costs.

Organic waste is compacted by means of a compactor machine that provides for the grinding of the waste, centrifugation of the ground waste to eliminate the liquid component and the successive drying thereof to produce a compact and dry organic compost that can be sent directly for re-use, without sewage or putrefaction problems.

The invention can also provide for a further compactor machine for solid waste, such as for example paper, plastic, metal, glass and tetra paks which, once compacted by means of grinding and/or crushing, are collected, by typology of waste, into special paper or plastic bags that are biodegradable in a short time and can, subsequently, be sent for recycling.

The integrated system for the treatment of household waste, object of the present invention, consists of a series of subsets.

In one embodiment of the invention, the system provides for the first compaction unit of solid waste, such as paper, plastic, metal, glass etc., which are ground or crushed according to the nature thereof. This first unit is mounted on sliding guides and moves, by means of a motor, above a group of baskets where the various bags, made of biodegradable material, that collect each relevant material are housed. An appropriate control system equipped with a keypad provides control of the movement of the first compaction unit along said sliding guides so as to empty the compacted material into the corresponding bag. The individual bag can be sent directly for recycling as is.

In a further embodiment, the first compaction unit of solid waste is divided between two subsystems: one, that is stationary, is only responsible for the crushing/compaction of glass and one, that is movable on sliding guides, is responsible for the differential treatment of the other typologies of inorganic waste. For organic waste there is present a second compaction unit, which has the task of grinding the waste to then pass it to the successive centrifugation treatment where the majority of the liquids, that can be disposed of by means of the fresh water drain, are eliminated. Once centrifuged, the waste is dried in a successive drying zone, by means of a jet of hot air, possibly assisted by a microwave treatment, which dries it while it is constantly stirred. At this point the waste passes into the basket from which it can then be sent for re-use as compost or fuel with the entire bag.

Advantageously, the configuration of the two compaction machines is such that the whole waste separation and treatment system is very compact.

The system of the invention can be used, in whole or in part in various particular situations.

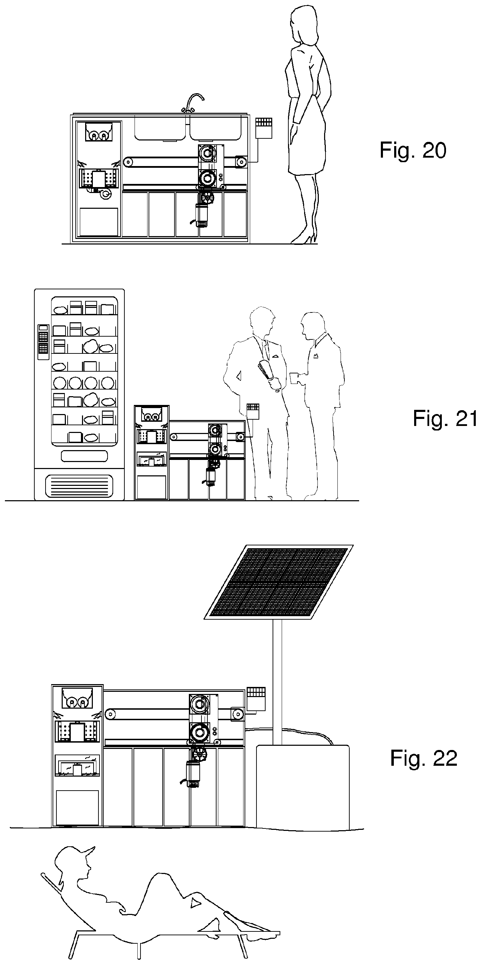

In a first, extremely compact, variant the system of the invention is entirely housed in a piece of furniture, for example an under-sink cabinet as illustrated in Figure 20, offering a version that is especially suitable for the disposal of domestic family waste. A version having larger dimensions can be intended for use in bars, communities or restaurants.

In a second variant, illustrated in Figure 21, the system of the invention is combined with an automatic food and drinks dispenser so that the food or drinks packages are immediately treated with the relevancy lines and then sent for re-use.

In a third variant, illustrated in Figure 22, the system of the invention is not guarded and is powered by solar panel, battery pack and inverter for use in holiday, trekking or outing locations.

In all variants, at the end of the treatment cycle, carried out locally in the same place of production of the waste, the recovered material which is separated, compacted and also dried can, in the case of the wet waste, be sent directly to the recycling or re-use process.

The dependent claims describe preferred embodiments of the invention.

### Brief description of the drawings

Further characteristics and advantages of the invention will become clearer in the light of the detailed description of a preferred but non-exclusive embodiment of an integrated waste separation and treatment system, illustrated by way of a nonlimiting example, with the assistance of the accompanying drawings, in which:
Figure 1 schematically represents a first embodiment of the system according to the invention;
Figure 2 is a side view of the system of Figure 1,
Figure 3 represents a cross-sectional view along the A-A plane of the system of Figure 1;
Figure 4 represents a magnification of a first part of the system of Figure 1;
Figure 5 represents a side view of the first part of Figure 4;
Figure 6 represents a magnification of a second part of the system of Figure 1;
Figure 7 represents a side view of the second part of Figure 6;
Figure 8 represents a magnification of a third part of the system of Figure 1;
Figure 9 represents a side view of the third part of Figure 8;
Figure 10 represents a partial top view of the third part of Figure 8;
Figure 11 represents the third part of Figure 8 in different positions obtained by means of a rotation about an axis thereof;
Figure 12 represents a magnification of a fourth part of the system of Figure 1;
Figure 13 represents a side view of the fourth part of Figure 12;
Figure 14 represents the fourth part of Figure 12 in different positions obtained by means of a rotation about an axis thereof;
Figure 15 represents a second embodiment of the system according to the invention;
Figure 16 represents a top view of the system of Figure 15;
Figure 17 represents a side view of the system of Figure 15;
Figure 18 represents a magnification of a first part of the system of Fig. 17;
Figure 19 represents a magnification of a second part of the system of Fig. 17;
Figure 20 represents the system of the invention in a first application;
Figure 21 represents the system of the invention in a second application;
Figure 22 represents the system of the invention in a third application.

The same reference numbers in the drawings identify the same elements or components.

### Detailed description of preferred embodiments of the invention

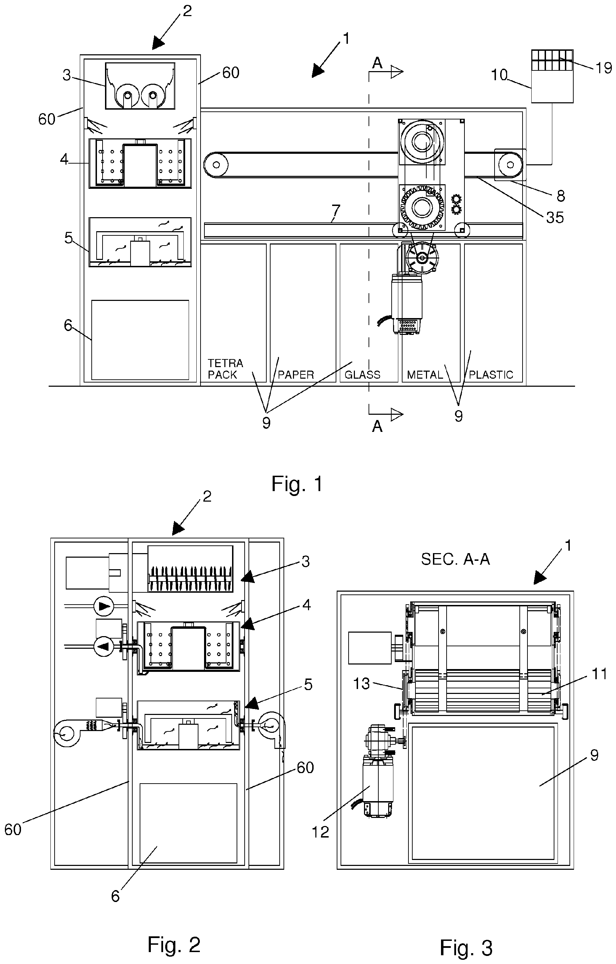

With reference to Figures 1 to 22 there are represented embodiments of a waste treatment and separation system according to the invention. The system comprises:
- a first machine 2 for compacting organic solid waste, object of the present invention,
- and a second machine 1 for compacting inorganic solid waste and separating it on the basis of the material making up the inorganic solid waste.

The first machine 2, illustrated in a first embodiment thereof in Figures 1, 2 and 6-14, comprises grinding means 3 of the organic solid waste, centrifugation means 4 of the ground organic solid waste and drying means 5 of the ground and centrifuged organic solid waste. The first machine 2 is provided with a single compartment 6 for collecting the ground, centrifuged and dried organic solid waste. The possibility of providing for more than one compartment is not however excluded.

The variant of the first machine 2, illustrated in Figure 1, provides for the arrangement of the components thereof along the vertical direction with, from the top down, the grinding means 3, the centrifugal means 4, the drying means 5 and the collection compartment 6.

In this first machine 2 there is treated organic waste originating from, for example a kitchen, either domestic or industrial, or from a commercial business.

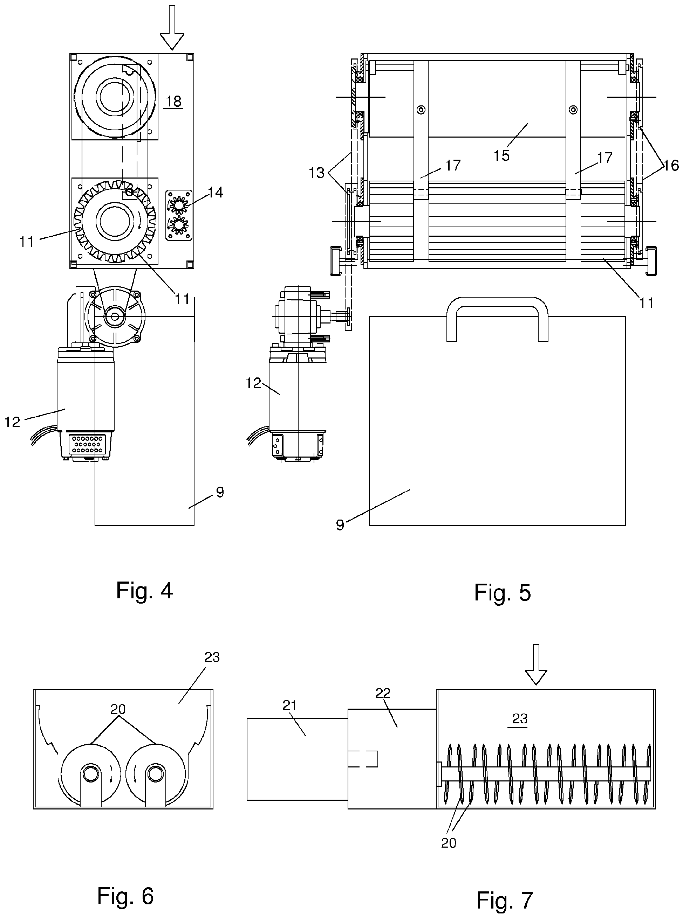

The organic waste to be treated is first ground by the grinding means 3, comprising for example (Figures 6 and 7) contra-rotating blades 20 or contra-rotating sprockets or contra-rotating worm screws or other equivalent means, arranged in a hopper 23 and driven by a motor 21 by means of a transmission 22. Said grinding means 3 have the task of significantly reducing the dimensions of the organic material. The separation of the liquid part of the organic waste from the solid part has already begun in this grinding step.

After the organic waste is ground in the hopper 23, the ground organic waste spills from said hopper and passes into the successive centrifugation zone. In said zone the centrifugation means 4 comprise
- a movable container or basket 50, provided with a plurality of holes 39, into which the ground organic waste arrives;
- a motor 24 for transmitting a centrifuge rotation, in one direction of rotation or in the other, to said movable container 50 around a first axis of rotation X;
- a stationary container or basket 25, arranged outside of the movable container 50 so as to contain it and collect the centrifugation liquid expelled through the holes 39 during centrifugation;
- a recovery pump 26 of the centrifugation liquid, which fishes in proximity of the bottom of said stationary container 25 and directs the liquid towards a fresh water drain;
- a system of movable radial vanes 27, arranged within the movable container 50 with the task of facilitating the removal of the centrifuged waste from the walls and from the bottom of the movable container 50.

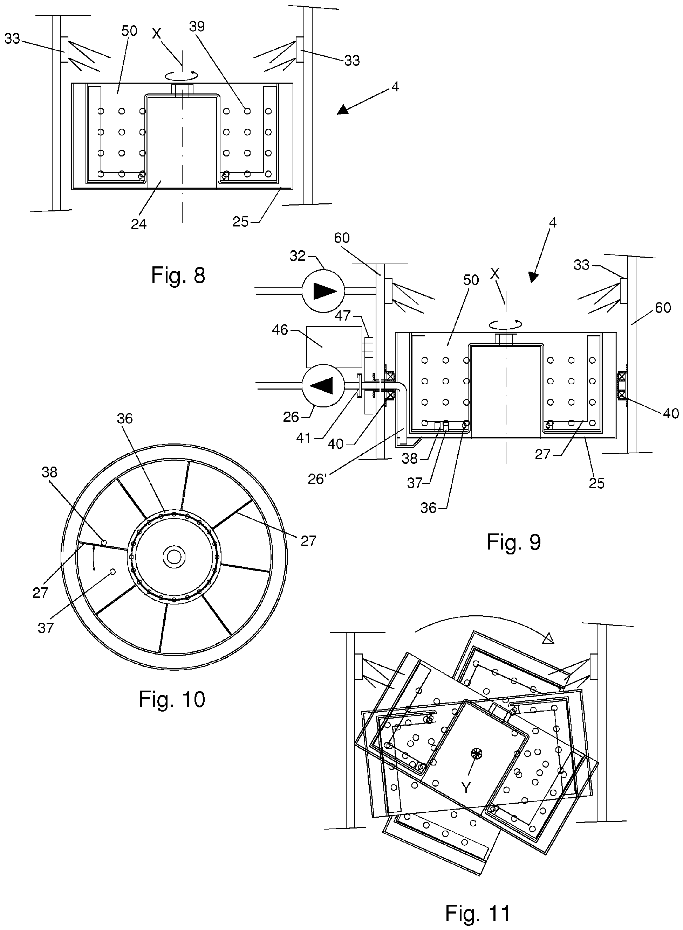

The movement of the radial vanes or blades 27, preferably having an L-shaped cross section, is induced by the same motor 24 for the transmission of the centrifugation rotation. The radial vanes 27 rotate freely by means of a bearing 36 (Figures 9 and 10) up to a first stop 37 and to a second stop 38, opposite to the first stop, which are fixed in the movable container 50. In the example of the drawings, the stops 37, 38 are provided on the bottom of the movable container 50. The possibility of providing said stops, as an alternative or in addition, on the side walls of the movable container 50 is not excluded.

By rotating the movable container 50, alternately in one direction of rotation and in the other, the radial vanes 27 move until they abut on the stops, carrying out the scraping of the walls and of the bottom of the movable container 50.

The bearing 36 is housed around a raised zone of the movable container 50 within which there is provided the motor 24.

The recovery pump 26 is arranged outside of the stationary container 25 and by means of a pipe 26' fishes in proximity of the bottom of said stationary container 25, conveying the centrifugation liquid towards the fresh water drain (not illustrated).

The discharging of the ground and centrifuged waste into the next drying zone occurs, according to a first variant, by means of an overturning of the centrifugation means 4. The stationary outer container 25 is hinged, at two opposite ends thereof, on bearings 40 that are fixed to the side walls 60 of the second block 2 and is equipped with appropriate rotary joints 41 to allow the passage of pipes and cables, for example the passage of the pipe 26', through said walls 60.

Externally to one of said walls 60 there are arranged, in addition to the recovery pump 26, a further motor 46 with relative transmission 47 that controls the rotation of the stationary container 25, containing the movable container 50, with respect to a second axis of rotation Y to flip them over at the end of the centrifugation step and discharge the ground and centrifuged waste into the successive drying zone. Alternatively, in a second variant, the discharging of the ground and centrifuged waste into the successive drying zone occurs by means of an opening provided in the bottom of the stationary container 25 that is activated at the end of the centrifugation step.

The centrifugation means 4 can also be provided with a washing device comprising a series of nozzles 33 (see for example Figures 8 and 9) that are fixed to the side walls 60, above the stationary container 25, and are supplied by a pump 32 that is connected to the water system. These nozzles 33 can thus spray atomised water or steam towards both the containers or baskets 50 and 25 and towards the lower part of the grinding means 3, thus promoting the cleaning thereof.

The atomised water can have added bicarbonate or other suitable product adapted to prevent bad smells and promote the cleaning and disinfection of the centrifugation zone and of the further zones concerned.

The drying means 5, which receive the ground and centrifuged organic waste when the centrifugation liquid has already been drawn and directed towards the fresh water drain, comprise:
- a group of resistors 28;
- a first fan 29 configured to generate an air flow that passes through said group of resistors 28;
- a container or basket 70 into which the ground and centrifuged organic waste arrives;
- a pipe 71 that conveys the air flow heated by the resistors 28 into the container 70;
- a mixer 30 for continuously moving the ground and centrifuged waste in the container 70, in order to promote the uniform drying thereof;
- a motor 42 for driving said mixer 30;
- a second fan 43 for extracting the drying air from the container 70 and that provides for the disposal thereof by through the fresh water drain pipe (not illustrated).

There could also be provided a magnetron for further drying the ground, centrifuged waste, dried with hot air, through the use of microwave technology.

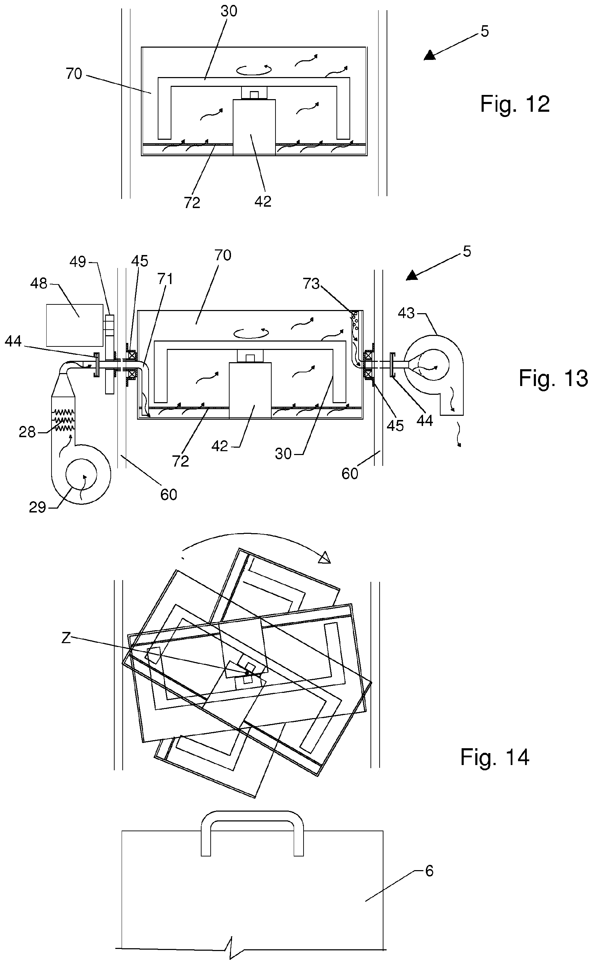

The container 70 can be provided with a perforated plate 72 (Figures 12 and 13) in a position such as to define a double bottom of the container 70, the perforated plate supporting the ground and centrifuged waste discharged into the container 70. In this case the pipe 71 passes through said perforated plate 72 with one end thereof so that the hot air is inlet into this double bottom and, passing through the holes in the plate 72, passes through the mass of waste to be dried from the bottom upwards.

The discharging of the ground, centrifuged and dried waste into the underlying collection compartment 6 takes place, according to a first variant, by means of an overturning of the container 70. Said container 70 is hinged, at the two opposite ends thereof, on bearings 45 fixed onto the side walls 60 and is equipped with appropriate rotary joints 44 or with appropriate slack to allow the passage of pipes and electric cables, for example the passage of the pipe 71, through said walls 60. Externally to one of said walls 60 there are arranged, in addition to the fan 29 and to the resistors 28, a further motor 48 with relative transmission 49 that controls the rotation of the container 70 with respect to an axis of rotation Z thereof to overturn it at the end of the drying step and discharge the dried waste into the collecting compartment 6.

The second fan 43 is arranged on the outside of a further wall 60 and by means of a pipe 73, possibly suitably perforated (Figure 13), crossing said further wall 60 draws the drying air from the container 70. Alternatively, in a second variant, the discharging of the ground, centrifuged and dried waste into the collection compartment 6 takes place through an opening provided in the bottom of the container 70 that is activated at the end of the drying step. In this latter case, the container 70 is not provided with the perforated plate 72 and with the relative foundation.

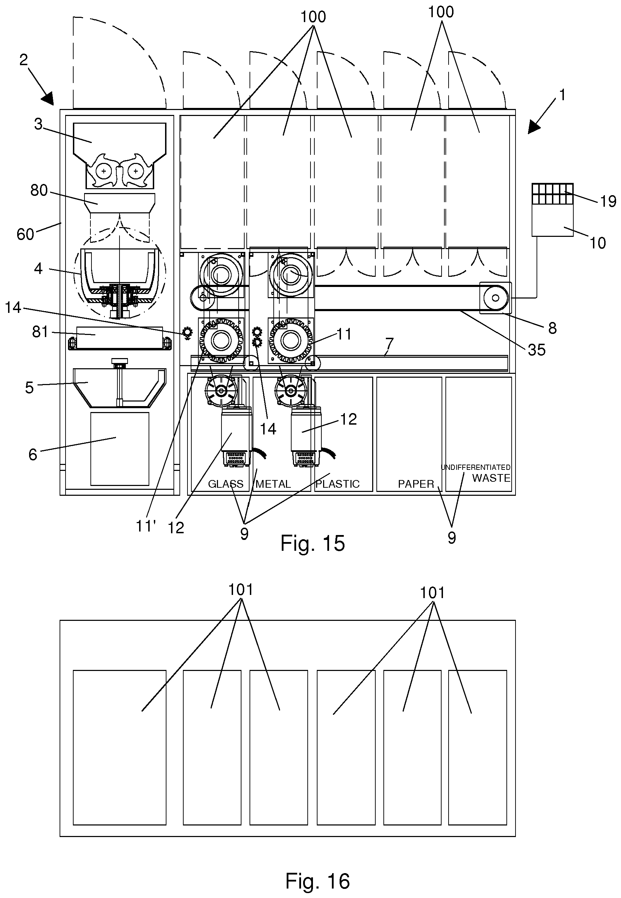

With reference to Figures 15 to 19 there is represented a second embodiment of the system which includes a second embodiment of the first compactor machine 2 for organic solid waste. This first compactor machine 2 comprises all the above-described components relating to the grinding means 3, to the centrifugation means 4 and to the drying means 5.

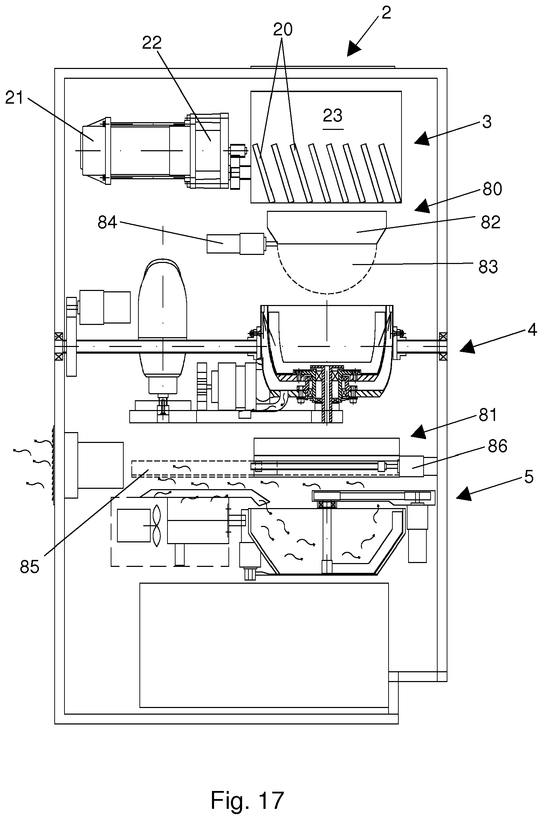

Advantageously in this second variant of the first machine 2, better illustrated in Figure 17, between the grinding means 3 and the centrifugation means 4 there are provided weighing means 80 of the ground organic solid waste, and between the centrifugation means 4 and the drying means 5 there is provided a waiting zone 81 for the ground and centrifuged organic solid waste.

The weighing means 80 have the task of optimising the centrifuge load to a predetermined amount. The ground waste is automatically weighed in a basket or tank 82 equipped with drop bottom 83, driven by a motor 84. When the ground waste reaches the set weighing value or when a predetermined maximum dwelling time is exceeded, the drop bottom 83 opens and pours the contents into the successive centrifugation zone.

The waiting zone 81, which also comprises a tank or basket equipped with a movable bottom 85 driven by a motor 86 becomes necessary when there is a need to optimize the grinding/centrifugation times and the drying times. When the centrifugation times are much shorter than the drying times, the incoming centrifuged waste accumulates in the waiting zone 81 while the machine is still performing the previous drying cycle. On completion of this drying cycle, the dried waste is discharged into the underlying compartment 6, the movable bottom 85 of the waiting zone 81 opens and the awaiting centrifuged waste commences its drying cycle.

Both the weighing means 80 and the waiting zone 81 therefore act as a buffer to respectively optimise the centrifugation and drying operations.

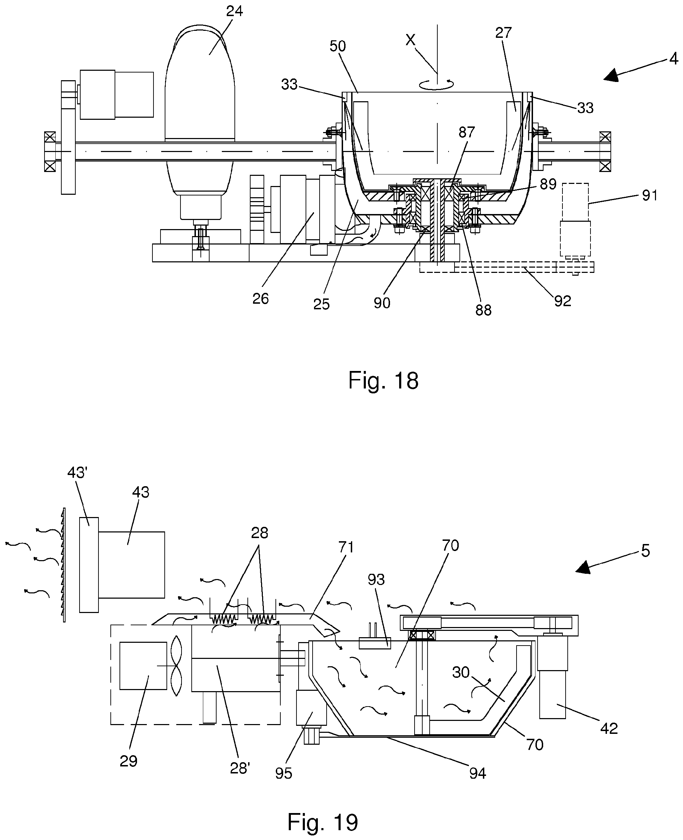

The centrifugation means 4 in said second embodiment (Fig. 18) comprise:
- a movable container or basket 50, provided with a plurality of holes (not illustrated), in which the ground organic waste arrives;
- a motor 24 for transmitting a centrifugation rotation, in one direction of rotation or in the other, to said movable container 50 around a first axis of rotation X;
- a stationary container or basket 25, arranged outside of the movable container 50 so as to contain it and collect the centrifugation liquid expelled through the holes during centrifugation;
- a recovery pump 26 of the centrifugation liquid, which fishes in proximity of the bottom of said stationary container 25 and conveys the liquid towards a fresh water drain;
- a system of movable radial vanes 27, arranged within the movable container 50 with the task of facilitating the removal of the centrifuged waste from the walls and from the bottom of the movable container 50.

The only difference with respect to the first embodiment is that the movement of the radial vanes 27, preferably having an L-shaped cross section, is induced by the motor 24 for the transmission of the centrifugation rotation that is arranged externally to the movable container 50. Said motor 24 puts the movable container 50 into rotation by means of two free wheels 87 and 88, each of which allows rotation in a single direction, one in the opposite direction with respect to the other. When the motor 24 drives the movable container 50, the free wheel 87 is rigid and the free wheel 88 allows rotation together with the bearing 89. When the motor 24 reverses the rotational motion, the free wheel 87 is free and the free wheel 88 is rigid so that the vanes 27 rotate about the free wheel 87 together with the bearing 90, scraping the walls of the movable container 50.

The free wheels 87 and 88 and the corresponding bearings 89, 90 are arranged within a raised zone of the stationary container 25.

Where it should be necessary to increase the torque required for the scraping of the container 50, the separate movement of the vanes 27 is provided by means of a dedicated geared motor 91 which, by means of an auxiliary belt 92 and with an appropriate combination of free wheels, carries out the scraping of the walls when the container 50 has been stopped following centrifugation.

The discharging of the ground and centrifuged waste into the successive drying zone occurs, according to a first variant, by means of a overturning of the centrifugation means 4, in a manner analogous to what is described above.

Alternatively, in a second variant, the discharging of the ground and centrifuged waste into the successive drying zone occurs by means of an opening provided in the bottom of the stationary container 25 that is activated at the end of the centrifugation step.

In this case also the centrifugation means 4 can also be provided with a washing device comprising a series of nozzles 33.

The drying means 5 in said second embodiment (Fig. 19), configured to further optimise energy consumption, comprise:
- a magnetron 28' for the generation of microwaves;
- a group of resistors 28;
- a first fan 29 configured to generate an air flow that first crosses the magnetron 28' to preheat itself and then said group of resistors 28, possibly switched on when necessary;
- a container or basket 70 into which the ground and centrifuged organic waste arrives;
- a pipe 71 that conveys the air flow heated by the magnetron 28' and possibly by the resistors 28 into the container 70;
- a mixer 30 for continuously moving the ground and centrifuged waste in the container 70, in order to promote the uniform drying thereof;
- a motor 42 for driving said mixer 30;
- a second extracting fan 43, provided with output filter 43' for odour control, to extract the drying air from the container 70;
- a screen (not illustrated) to prevent the external leakage of microwaves.

The ground and centrifuged material coming from the waiting zone 81 is discharged into the container 70 where the drying step can commence combined with hot air and microwave beam to push drying of the waste to the maximum. During this phase, the mixer 30 driven by the motor 42 provides for the constant mixing of the product being dried in order to promote dehydration and prevent the formation of product agglomerates.

The discharging of the ground, centrifuged and dried waste into the underlying collection compartment 6 occurs when the sensor 93 senses that the waste is sufficiently dry. This sensor 93 stops the drying means and the movable bottom 94 of the container 70 opens, driven by the motor 95, and the waste, which is now dried, is discharged into the underlying compartment 6.

In both embodiments, the compactor machine 2 for organic solid waste is provided with an appropriate hardware control unit equipped with dedicated software, responsible for controlling the operating parameters of the organic waste treatment process. In particular the motors and the relative operating times will be managed, together with the drying step, with the correct sequence for the synchronism between one transaction and the other. A further hardware control unit, equipped with appropriate dedicated software, will manage the interface towards the user. In a further version, the entire machine can be operated and controlled remotely with a remote control or a distance domotic control.

A first variant of the second machine 1, illustrated in Figures 1 and 3-5, on the other hand comprises compacting means for grinding or crushing the inorganic solid waste inlet into said second machine, said compacting means being movable on sliding guides 7 above a plurality of compartments or housings 9 and configured to discharge each typology of ground inorganic solid waste into a respective compartment 9. There is advantageously provided a control system provided with a keypad 19 to control the movement of the compacting means at the individual compartments 9.

Said compacting means, as schematically illustrated in Figures 3 to 5 are provided with a grinding unit 11 comprising for example gears or shaped blades that, driven by a motor 12 by means of a transmission 13, has the purpose of grinding and/or compacting inorganic solid waste such as paper, metal, plastic, glass etc.

To improve grinding/compaction, the above-mentioned compacting means also comprise an appropriate contrast unit 14, which also comprises gears or shaped blades for example. The contrast unit 14 can be driven by a motor by means of a transmission or be free as in the case of Figure 4.

To facilitate the inlet of the materials into the grinding unit 11 there can be provided a driving blade 15, also powered by an appropriate transmission 16 that moves synchronously with the grinding unit 11 by means of appropriate connecting rods 17 or equivalent synchronization mechanisms.

The grinding unit 11 is thus able to grasp the material inlet into the hopper 18, shredding and dragging it through the grinding/compaction zone to then send it to the underlying compartments 9 where it is collected to be subsequently sent for recycling with the entire bag. In said hopper 18 there are arranged both the grinding unit 11 and the contrast unit 14.

The compacting means are mounted on sliding guides 7, so that, by means of an appropriate motor 8 connected to a transmission 35, for example of the toothed belt type or other suitable type, are able to position themselves directly on the relevant compartment 9 to deposit the treated material.

The control system for controlling the movement of the compacting means at the individual compartments 9 comprises a hardware board 10 equipped with an appropriate software and controlled by the operating keypad 19 so as to provide the necessary control logic for execution of the correct movement.

Where it should be necessary or convenient, the waste can also be directly deposited in the compartment 9, by opening an extraction door and skipping the compacting step where this should be superfluous.

In a second variant of the compactor machine 1 for inorganic solid waste, illustrated in Figures 15 and 16, there are on the other hand provided two grinding units: a first grinding unit 11', that is stationary and dedicated to crushing glass; and a second grinding group 11, that is movable on sliding guides 7, for the grinding/compaction of other waste such as paper, metal, plastic, non-differentiated waste etc. Beneath the first grinding unit 11' there is provided a single compartment 9 for collecting the crushed glass. Beneath the path of the second grinding unit 11 on the sliding guides 7, there is instead provided a plurality of compartments 9 for collecting a respective typology of ground inorganic solid waste, except glass. The second grinding unit 11, mounted on the sliding guides 7, by means of an appropriate motor 8 connected to a transmission 35, for example of the toothed belt type or other suitable type, is able to position itself directly on the relevant compartment 9 to deposit the treated material.

Like the first variant, this second variant of the machine 1 provides, for each grinding unit, the presence of a respective motor 12, transmission 13, contrast unit 14, hopper 18, driving blade 15 and relative transmission 16, connecting rods 17 or equivalent synchronization mechanism.

The control system for controlling the movement of the second grinding unit 11 at the individual compartments 9 comprises a hardware board 10 equipped with an appropriate software and controlled from the operating keypad 19 so as to provide the necessary control logic for execution of the correct movement.

In this second variant of the machine 1 (Fig. 15) the loading of waste to be treated takes place, preferably, but not exclusively, from above.

There are advantageously provided waiting zones 100 before the intervention of the grinding unit 11, 11', which become necessary when multiple users need to use the machine contemporaneously, for example, at a canteen exit. In this case the waiting zones 100, one for each typology of waste, allow the users to rapidly deposit the waste and give the machine the possibility of working according to the required times, treating one waiting zone at a time during the period of non-utilisation of the machine itself by the users.

Access to the different waiting zones 100 of the machine 1, or, alternatively, directly to the hoppers of the grinding group or groups 11, 11', and access to the hopper of the grinding means 3 of the machine 2 occurs by means of doors 101 arranged, as in the example of Figures 15 and 16, on the upper surface of the waste treatment system.

In all the embodiments of the invention, each compartment or housing 6, 9 can consist of a container that can be internally coated with a paper bag and/or biodegradable plastic or can consist directly of a rigid paper and/or biodegradable plastic bag.

The collection bags, made of biodegradable material in short times, generally of paper coated with a biodegradable plastic film of organic origin, are designed to be able to be sent directly to the recycling process without the need for intermediate steps. Their biodegradability characteristic and recycling predisposition indeed permits a rapid separation of the bag material from the content so as to send the different materials on different recovery lines.

The shape of the collecting bags, advantageously equipped with handles, reinforcements, and closure, allows an easy transport, both by the individual user and by the subsequent collection means.

## Claims

1. A compactor machine (2) for organic solid waste comprising grinding means (3) for grinding the organic solid waste, centrifugation means (4) for centrifuging the ground organic solid waste and drying means (5) for drying the ground and centrifuged organic solid waste;
wherein the centrifugation means (4) comprise
- a first container (50), provided with a plurality of holes (39), adapted to receive the ground organic waste coming from the grinding means (3);
- a first motor (24) for transmitting a centrifugal rotation, in one direction of rotation or in the other, to said first container (50) about a first axis of rotation (X);
- a second container (25), arranged externally to the first container (50) so as to contain said first container (50) and collect the centrifugation liquid ejected through the holes (39) during the centrifugation; **characterized in that** the drying means (5) comprise
- a third container (70) adapted to receive the ground and centrifuged organic waste coming from the centrifugation means (4);
- hot air inlet means (29, 28, 28', 71) into said third container (70);
- an extraction device (43) for extracting the drying air from the third container (70).

2. Machine according to claim 1, wherein the grinding means (3) are arranged in a hopper (23).

3. Machine according to claim 1 or 2, wherein there are provided weighing means (80) between the grinding means (3) and the centrifugation means (4)
and/or a waiting area (81) between the centrifugation means (4) and the drying means (5).

4. Machine according to any one of the preceding claims, wherein there are provided mixing means (30) for moving the ground and centrifuged waste in the third container (70).

5. Machine according to any one of the preceding claims, wherein the third container (70) is hinged on bearings (45) fixed onto side walls (60) of the machine and is adapted to rotate about an axis of rotation thereof (Z) to tip over at the end of the drying step and discharge the dried organic waste into a respective collection compartment (6); or the third container (70) is provided with an opening on the bottom thereof that is adapted to be activated at the end of the drying step to discharge the ground, centrifuged and dried organic waste into a respective collection compartment (6).

6. Machine according to any one of the preceding claims, wherein a pump (26) is provided to recover the centrifugation liquid from the bottom of said second container (25) and convey said liquid towards a fresh water drain; and/or wherein there is provided a plurality of movable radial vanes (27), arranged within the first container (50), to facilitate removal of the centrifuged waste from the walls and from the bottom of said first container during the centrifugation step.

7. Machine according to any one of the preceding claims, wherein the second container (25) is hinged on bearings (40) fixed to side walls (60) of the machine (2) and is adapted to rotate about a second rotation axis (Y) to tip over at the end of the centrifugation step and discharge the ground and centrifuged waste into a waiting zone (81) provided between the centrifugation means (4) and the drying means (5) or directly into the third container (70); or wherein the second container (25) is provided with an opening on the bottom thereof that is adapted to be activated at the end of the centrifugation step to discharge the ground and centrifuged organic waste into a waiting zone (81) provided between the centrifugation means (4) and the drying means (5) or directly into the third container (70).

8. Machine according to any one of the preceding claims, wherein said hot air inlet means (29, 28, 28', 71) comprise at least one resistor (28) and/or a microwave generator (28').

9. Integrated system for the differential treatment of waste comprising
- a first compactor machine (2) for compacting organic solid waste according to any one of the preceding claims,
- and a second compactor and separator machine (1) for compacting inorganic solid waste and separating it on the basis of the material making up the inorganic solid waste, said second machine comprising compacting means for grinding and/or pressing the inorganic solid waste introduced into the second machine, wherein at least part of said compacting means are movable on sliding guides (7) above a plurality of compartments (9), each compartment (9) being adapted to receive a respective type of inorganic solid waste.

10. Integrated system for the differential treatment of waste according to claim 9, wherein there are provided a first grinding unit (11') that is stationary and dedicated to the crushing of glass, and a second grinding unit (11), that is movable on the sliding guides (7), for the grinding/compaction of other non-organic solid waste.

11. Integrated system for the differential treatment of waste, according to claim 10, wherein waiting zones (100) are provided above said first and second grinding units (11, 11').

## Patentansprüche

1. Verdichtermaschine (2) für organischen festen Abfall mit einem Mahlmittel (3) zum Zermahlen des festen organischen Abfalls, einem Zentrifugiermittel (4) zum Zentrifugieren eines gemahlenen organischen festen Abfalls und einem Trocknungsmittel (5) zum Trocknen des gemahlenen und zentrifugierten organischen festen Abfalls;
wobei das Zentrifugiermittel (4) umfasst:
- einen ersten Behälter (50), der mit einer Mehrzahl von Löchern (39) versehen und derart ausgebildet ist, den von dem Mahlmittel (3) stammenden gemahlenen organischen Abfall aufzunehmen;
- einen ersten Motor (24) zum Übertragen einer Zentrifugalrotation in einer Rotationsrichtung oder in der anderen an den ersten Behälter (50) um eine erste Rotationsachse (X);
- einen zweiten Behälter (25), der außerhalb des ersten Behälters (50) angeordnet ist, so dass er den ersten Behälter (50) enthält und die durch die Löcher (39) während der Zentrifugierung ausgestoßene Zentrifugierflüssigkeit zu sammeln;
**dadurch gekennzeichnet, dass** das Trocknungsmittel (5) umfasst:
- einen dritten Behälter (70), der derart angepasst ist, den gemahlenen und zentrifugierten organischen Abfall, der von dem Zentrifugiermittel (4) stammt, aufzunehmen;
- ein Heißlufteinlassmittel (29, 28, 28', 71) in den dritten Behälter (70);
- eine Extraktionsvorrichtung (43) zum Extrahieren der trockenen Luft von dem dritten Behälter (70).

2. Maschine nach Anspruch 1, wobei das Mahlmittel (3) in einem Trichter (23) angeordnet ist.

3. Maschine nach einem der Ansprüche 1 oder 2, wobei vorgesehen sind:
ein Wiegemittel (80) zwischen dem Mahlmittel (3) und dem Zentrifugiermittel (4) und/oder
ein Wartebereich (81) zwischen dem Zentrifugiermittel (4) und dem Trocknungsmittel (5).

4. Maschine nach einem der vorhergehenden Ansprüche, wobei ein Mischmittel (30) zum Bewegen des gemahlenen und zentrifugierten Abfalls in dem dritten Behälter (70) vorgesehen ist.

5. Maschine nach einem der vorhergehenden Ansprüche, wobei der dritte Behälter (70) an Lagern (45) angelenkt ist, die an Seitenwänden (60) der Maschine fixiert sind, und derart angepasst ist, um eine Rotationsachse desselben (Z) zu rotieren, um an dem Ende des Trocknungsschrittes überzukippen und den getrockneten organischen Abfall in ein jeweiliges Sammelfach (6) auszutragen; oder der dritte Behälter (70) mit einer Öffnung an seinem Boden versehen ist, die zur Aktivierung an dem Ende des Trocknungsschrittes angepasst ist, um den gemahlenen, zentrifugierten und getrockneten organischen Abfall in ein jeweiliges Sammelfach (6) auszutragen.

6. Maschine nach einem der vorhergehenden Ansprüche, wobei eine Pumpe (26) vorgesehen ist, um die Zentrifugierflüssigkeit von dem Boden des zweiten Behälters (25) rückzugewinnen und die Flüssigkeit zu einem Frischwasserablauf zu fördern; und/oder wobei eine Mehrzahl bewegbarer radialer Flügel (27) vorgesehen sind, die in dem ersten Behälter (50) angeordnet sind, um eine Entfernung des zentrifugierten Abfalls von den Wänden und von dem Boden des ersten Behälters während des Zentrifugierschrittes zu unterstützen.

7. Maschine nach einem der vorhergehenden Ansprüche, wobei der zweite Behälter (25) an Lagern (40) angelenkt ist, die an Seitenwänden (60) der Maschine (2) fixiert sind, und derart angepasst ist, um eine zweite Rotationsachse (Y) zu rotieren, um an dem Ende des Zentrifugierschrittes überzukippen und den gemahlenen und zentrifugierten Abfall in eine Wartezone (81) auszutragen, die zwischen dem Zentrifugiermittel (4) und dem Trocknungsmittel (5) vorgesehen ist, oder direkt in den dritten Behälter (70) auszutragen; oder wobei der zweite Behälter (25) mit einer Öffnung an seinem Boden versehen ist, die zur Aktivierung an dem Ende des Zentrifugierschrittes angepasst ist, um den gemahlenen und zentrifugierten organischen Abfall in eine Wartezone (81) auszutragen, die zwischen dem Zentrifugiermittel (4) und dem Trocknungsmittel (5) vorgesehen ist, oder direkt in den dritten Behälter (70) auszutragen.

8. Maschine nach einem der vorhergehenden Ansprüche, wobei das Heißlufteinlassmittel (29, 28, 28', 71) zumindest einen Widerstand (28) und/oder einen Mikrowellengenerator (28') umfasst.

9. Integriertes System für die Differentialbehandlung von Abfall, umfassend:
- eine erste Verdichtermaschine (2) zum Verdichten von organischem festem Abfall gemäß einem der vorhergehenden Ansprüche, und
- eine zweite Verdichter- und Separatormaschine (1) zum Verdichten von anorganischem festem Abfall und zum Trennen desselben auf der Basis des Materials, das den anorganischen festen Abfall ausmacht, wobei die zweite Maschine ein Verdichtungsmittel zum Mahlen und/oder Pressen des organischen festen Abfalls, der in die zweite Maschine eingeführt ist, umfasst, wobei zumindest ein Teil des Verdichtungsmittels an Gleitführungen (7) über einer Mehrzahl von Fächern (9) bewegbar ist, wobei jedes Fach (9) derart angepasst ist, einen jeweiligen Typ von organischem festem Abfall aufzunehmen.

10. Integriertes System für die Differentialbehandlung von Abfall nach Anspruch 9, wobei eine erste Mahleinheit (11'), die stationär und zum Zerkleinern von Glas bestimmt ist, und eine zweite Mahleinheit (11) vorgesehen sind, die an den Gleitführungen (7) zum Mahlen/Verdichten von anderem nicht organischem festem Abfall bewegbar ist.

11. Integriertes System für die Differentialbehandlung von Abfall nach Anspruch 10, wobei Wartezonen (100) über der ersten und zweiten Mahleinheit (11, 11') vorgesehen sind.

## Revendications

1. Machine de compactage (2) pour de déchets solides organiques comprenant des moyens de broyage (3) pour broyer les déchets solides organiques, des moyens de centrifugation (4) pour centrifuger les déchets solides organiques broyés et des moyens de séchage (5) pour sécher les déchets solides organiques broyés et centrifugés ;
dans lequel les moyens de centrifugation (4) comprennent
- un premier récipient (50), prévu avec une pluralité de trous (39), adapté pour recevoir les déchets organiques broyés provenant des moyens de broyage (3) ;
- un premier moteur (24) pour transmettre une rotation centrifuge, dans une direction de rotation ou dans l'autre, audit premier récipient (50) autour d'un premier axe de rotation (X) ;
- un deuxième récipient (25), agencé à l'extérieur du premier récipient (50) de manière à contenir ledit premier récipient (50) et à recueillir le liquide de centrifugation éjecté à travers les trous (39) pendant la centrifugation ;
**caractérisé en ce que** les moyens de séchage (5) comprennent
- un troisième récipient (70) adapté pour recevoir les déchets organiques broyés et centrifugés provenant des moyens de centrifugation (4) ;
- des moyens d'entrée d'air chaud (29, 28, 28', 71) dans ledit troisième récipient (70) ;
- un dispositif d'extraction (43) pour extraire l'air de séchage du troisième récipient (70).

2. Machine selon la revendication 1, dans laquelle les moyens de broyage (3) sont agencés dans une trémie (23) .

3. Machine selon la revendication 1 ou 2, dans laquelle sont prévus des moyens de pesée (80) entre les moyens de broyage (3) et les moyens de centrifugation (4)
et/ou une zone d'attente (81) entre les moyens de centrifugation (4) et les moyens de séchage (5).

4. Machine selon l'une quelconque des revendications précédentes, dans laquelle sont prévus des moyens de mélange (30) pour déplacer les déchets broyés et centrifugés dans le troisième récipient (70).

5. Machine selon l'une quelconque des revendications précédentes, dans laquelle le troisième récipient (70) est articulé sur des paliers (45) fixés sur des parois latérales (60) de la machine, et est adapté pour tourner autour d'un axe de rotation de celle-ci (Z) pour basculer à la fin de l'étape de séchage et décharger les déchets organiques séchés dans un compartiment de collecte respectif (6) ; ou le troisième récipient (70) est prévu avec une ouverture sur le fond de celui-ci qui est adaptée pour être activée à la fin de l'étape de séchage pour décharger les déchets organiques broyés, centrifugés et séchés dans un compartiment de collecte respectif (6).

6. Machine selon l'une quelconque des revendications précédentes, dans laquelle une pompe (26) est prévue pour récupérer le liquide de centrifugation à partir du fond dudit deuxième récipient (25) et transporter ledit liquide vers un drain d'eau fraîche ; et/ou dans laquelle est prévue une pluralité de pales radiales mobiles (27), agencées à l'intérieur du premier récipient (50), pour faciliter l'enlèvement des déchets centrifugés à partir des parois et du fond dudit premier récipient pendant l'étape de centrifugation.

7. Machine selon l'une quelconque des revendications précédentes, dans laquelle le deuxième récipient (25) est articulé sur des paliers (40) fixés aux parois latérales (60) de la machine (2) et est adapté à tourner autour d'un second axe de rotation (Y) pour basculer à la fin de l'étape de centrifugation et décharger les déchets broyés et centrifugés dans une zone d'attente (81) prévue entre les moyens de centrifugation (4) et les moyens de séchage (5) ou directement dans le troisième récipient (70) ; ou dans laquelle le deuxième récipient (25) est prévu avec une ouverture sur le fond de celui-ci qui est adaptée pour être activée à la fin de l'étape de centrifugation pour décharger les déchets organiques broyés et centrifugés dans une zone d'attente (81) entre les moyens de centrifugation (4) et les moyens de séchage (5) ou directement dans le troisième récipient (70).

8. Machine selon l'une quelconque des revendications précédentes, dans laquelle lesdits moyens d'entrée d'air chaud (29, 28, 28', 71) comprennent au moins une résistance (28) et/ou un générateur de micro-ondes (28').

9. Système intégré pour le traitement différentiel de déchets, comprenant
- une première machine de compactage (2) pour compacter des déchets solides organiques selon l'une quelconque des revendications précédentes,
- et une seconde machine de compactage et de séparation (1) pour compacter des déchets solides inorganiques et les séparer sur la base du matériau constitutif des déchets solides inorganiques, ladite seconde machine comprenant des moyens de compactage pour broyer et/ou presser les déchets solides inorganiques introduits dans la seconde machine, dans lequel au moins une partie desdits moyens de compactage sont mobiles sur des guides de coulissement (7) au-dessus d'une pluralité de compartiments (9), chaque compartiment (9) étant adapté pour recevoir un type respectif de déchets solides inorganiques.

10. Système intégré pour le traitement différentiel de déchets selon la revendication 9, **caractérisé en ce qu'**est prévue une première unité de broyage (11') qui est stationnaire et dédiée à l'écrasement du verre, et une seconde unité de broyage (11), qui est mobile sur les guides de coulissement (7), pour le broyage/compactage d'autres déchets solides non organiques.

11. Système intégré pour le traitement différentiel de déchets, selon la revendication 10, dans lequel des zones d'attente (100) sont prévues au-dessus desdites première et seconde unités de broyage (11, 11').
